Europäisches Patentamt

European Patent Office

Office européen des brevets

(11) Publication number: **0 323 165**
**A2**

# EUROPEAN PATENT APPLICATION

(21) Application number: 88312234.3

(22) Date of filing: 22.12.88

(51) Int. Cl.4: **B60C 11/01 , B60C 11/11**

(30) Priority: 29.12.87 JP 332260/87

(43) Date of publication of application:
05.07.89 Bulletin 89/27

(84) Designated Contracting States:
DE FR GB

(71) Applicant: SUMITOMO RUBBER INDUSTRIES LIMITED
No. 1-1, Tsutsui-cho 1-chome
Fukiai-ku Kobe-shi Hyogo(JP)

(72) Inventor: Iuchi, Munenori 1-46-1205
Minatojima Nakamachi
3-Chome Chuo-ku
Kobe-shi Hyogo-ken(JP)

(74) Representative: Stewart, Charles Geoffrey
SP TYRES UK LIMITED Tyre Technical
Division
Fort Dunlop Erdington Birmingham B24
9QT(GB)

(54) **Pneumatic tyre.**

(57) A pneumatic tyre has a tread provided in its shoulder regions with cooling grooves (5) inclined with respect to the circumferential direction of the tyre and arranged at intervals in the circumferential direction so as to define shoulder blocks (6). Each block (6) has two block walls (6A, 6B) facing each other and at least one of the block walls (6A or 6B) is provided with protrusions (7) extending towards the opposite wall (6B or 6A) long enough to contact the opposite wall as the shoulder blocks (6) change from a ground contacting state to a non ground contacting state during tyre rotation.

FIG.1

# PNEUMATIC TYRE

The present invention relates to a pneumatic tyre and particularly to a tyre tread having in the shoulder regions transverse tread grooves.

It is well known that the repeated elastic deformation and deflection in various portions of a tyre during rotation cause internal heat generation, particularly in the heavy duty tyres for trucks, buses and the like, where the tread rubber is thick, and its heat accumulating power is thus large and accordingly, the internal temperature is easily increased. As a result, ply separation and rubber separation are apt to be induced in the belt edge portions because the stress concentration is severe in these portions of the tyre.

Accordingly, in a prior art tyre for heavy duty vehicles, to enhance the heat radiation power and to diminish the heat accumulating power of the shoulder portions, the tyre shoulder regions A have been provided with transverse cooling grooves B inclined with respect to the circumferential direction of the tyre.

However, tyres having such grooves B generally suffer from heel and toe wear D caused on the blocks C formed between the cooling grooves B. This is because when the block changes from the non ground contacting state to the ground contacting state, the front edge C2 (or toe edge) deforms downwardly into the cooling groove B and is rubbed against the road surface which movement causes the front edge to wear. The rear edge C1 (or heel edge) which is brought into contact with the road also moves into its respective cooling groove B, but to a lesser extent, and is worn in a similar way to the front edge, both with respect to the main portion of the block C.

In order to mitigate this type of uneven wear, heretofore, two proposals have been made. One is to increase the block rigidity by using higher hardness rubber therefor in order to control the above-mentioned downward deformation movement of the front edge C2, and the other is to decrease the block rigidity in order to reduce the stress while the block rubber moves.

However, the problem of this heel and toe wear still remains and is not fully solved. It is, therefore, an object of the present invention to provide a pneumatic tyre in which heel and toe wear is effectively prevented by lessening the downward deformation movement of the front edge of the shoulder block, without increasing the block rigidity in the circumferential direction of the tyre.

According to one aspect of the invention provides a pneumatic tyre having a tread provided in its shoulder regions with cooling grooves said cooling grooves being inclined with respect to the circumferential direction of the tyre and arranged at intervals in the circumferential direction to define shoulder blocks one between the circumferentually adjacent pair of radiation grooves each cooling groove having a pair of block walls facing each other characterised by one of the walls being provided with protrusions extending towards the opposite wall so that they may contact therewith as the shoulder blocks enter or leave the ground contacting state during tyre rotation.

An embodiment of the present invention will now be described by way of example only with reference to the accompanying drawings; in which

Fig.1 is a partial plan view showing the tread of a tyre according to the present invention

Fig.2 is an enlarged plan view showing the cooling grooves thereof

Fig.3 is a sectional view taken along the line 1-1 of Fig .2

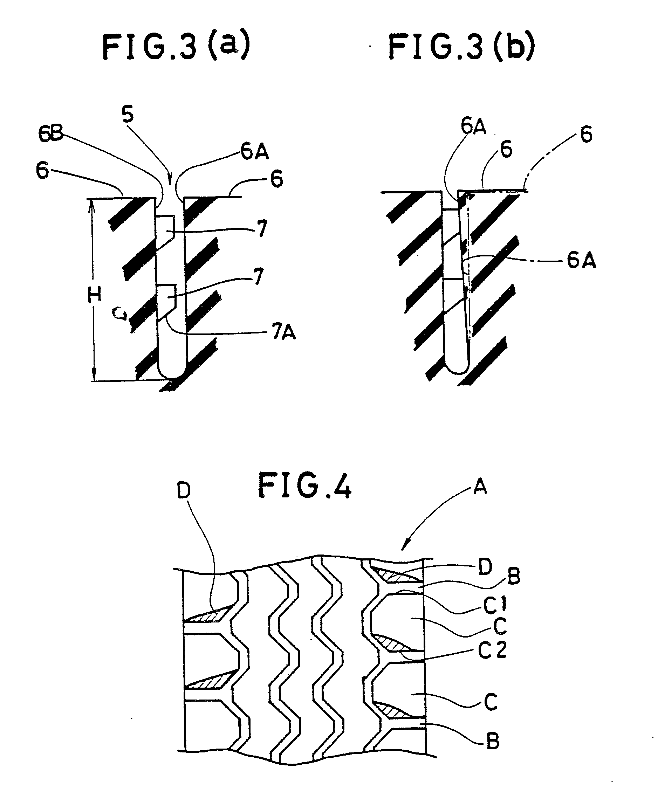

Fig.3 is a sectional view showing the operation of the tread pattern and

Fig .4 is a partial plan view showing a tread according to the prior art.

In the drawings, the pneumatic tyre 1 is a heavy duty radial tyre having a block type tread pattern. The tyre is provided on its tread 2 with two circumferentially extending main grooves L, to form a tread centre region extending circumferntially of the tyre and defined between the main grooves L two shoulder regions 3 extending circumferentially.

In the tread centre region, three circumferentially extending rows 9A, 9B and 9C of blocks are arranged in the axial direction of the tyre.

In each tread shoulder region, cooling grooves 5 inclined with respect to the circumferential direction of the tyre and extending across the width of the tread shoulder region 3 are arranged at regular intervals P in the circumferential direction. These form shoulder blocks 6 between the cooling radiation grooves 5.

To provide both the rigidity of the shoulder blocks 6 and the heat radiation power of the cooling grooves 5, the groove width W and relative circumferential spacing are respectively in the ranges of 1 to 5mm and 5 to 30mm and the groove depth H is the same as than that of the main groove L.

If the groove width W and the groove depth H or either of them is less specified the heat radiation power becomes decreased and causes internal temperature increase.

If the intervals P are larger than the range specified, the heat radiation power becomes decreased, and the circumferential rigidity of the shoulder blocks is increased, and accordingly the stress while the block rubber is moved is also increased which produces not only heel and toe wear but also the so called shoulder wear.

When the groove width W is greater than the range specified, although wider grooves are preferable for improving the heat radiation power, heel and toe wear becomes increased because the protrusion 7 as will be described below can not effectively restrain their falling down movement of the shoulder blocks edges.

Preferably, the cooling grooves 5 are inclined at 80 to 90 degrees with respect to the circumferential direction of the tyre. When the inclination angle is small, the tyre becomes poor in traction performance.

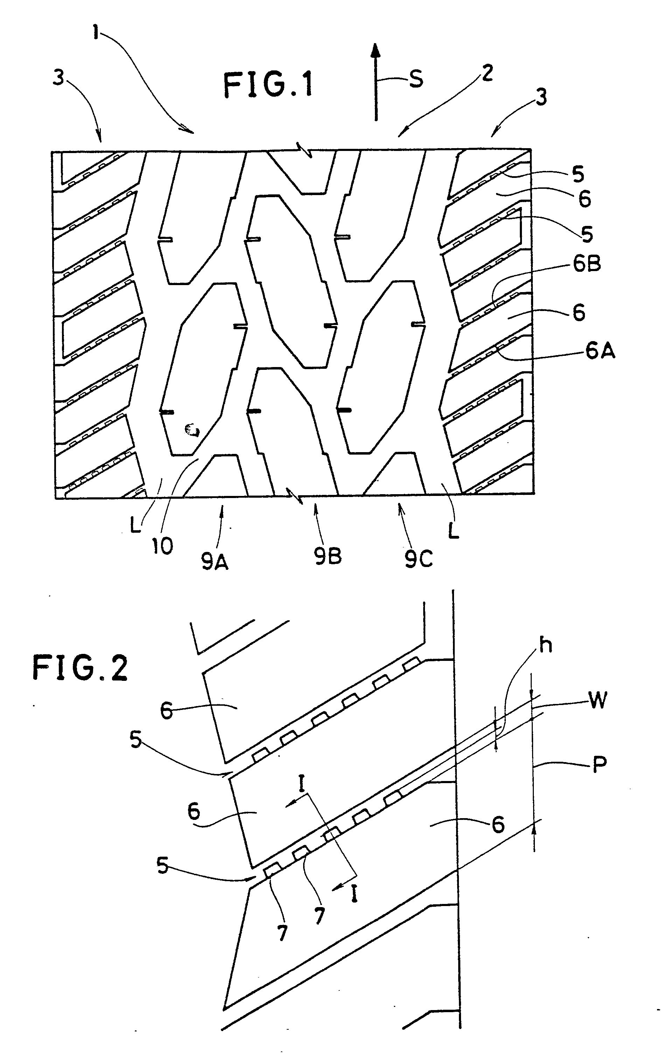

Each shoulder block 6 has two side walls facing the respective two cooling grooves 5 defining the shoulder block, and for convenience sake, on the assumption that the tyre rotates in the direction S from the bottom to the top in Fig. 1, one 6A one of the two walls which as located on the side toe side which comes into contact with the road surface first is referred as the front wall 6B on the other side heel side is referred as the front wall 6B.

In this example, the rear wall 6B is provided with protrusion 7 which are arranged in two rows in the depthwise direction of the cooling groove both rows being lower than the top surface of the shoulder blocks, as shown in Figs 2 and 3(a).

The length h of the protrusions 7 is so set that when the opposites front walls 6A of the next shoulder block moves relatively to the rear wall 6B during tyre rotation into the ground contact zone the protrusions on the rear wall contact the opposite front wall 6A, as shown in Figs 3 (a) and (b).

In particular, the length h is preferably set to be more than 1/3 times the width W of the cooling grooves 5. When the length h is less than 1.3 times the width W, the degree of the falling down movement of the front wall 6A increases so that the heel and toe wear occurs.

Because the shoulder blocks 6 with the protrusions 7 are generally formed in a tyre vulcanising process, in order to facilitate the demoulding process, that is, the step of removing the tyre from the mould, the radially inner surface or bottom surface of the protrusion 7 is provided with an upwards inclination. Also the protrusion may be formed on either of the tread opposite walls 6A or 6B. However, protrusions may be formed on both of them 6A & 6B.

As described above, in the tyre 1 according to the present invention, the amount of movement that the front edge of the shoulder block, is allowed to more or fall downwardly into the cooling groove 5 during tyre rotation, is substantially decreased by the protrusion 7 which support both opposite walls.

Furthermore, the rigidity of the shoulder blocks 6 in the circumferential direction can be maintained low, which makes it possible to reduce the stress in the block rubber when moving from the ground contacting state to non ground contacting state thereby improving the resistance to wear, not the heel and toe wear but also shoulder wear.

Still furthermore, the protrusions 7 provide the cooling groove 5 with increased surface area so as to improve their heat radiation power, which greatly contributes to the prolongation of tyre life.

## Claims

1. A pneumatic tyre having a tread provided in its shoulder regions (3) with cooling grooves (5) said cooling grooves (5) being inclined with respect to the circumferential direction of the tyre and arranged at intervals in the circumferential direction to define shoulder blocks (6) one between the circumferentially adjacent pair of radiation grooves (5) each cooling grooves having a pair of block walls (6a,6B) facing each other characterised by one of the walls (6a, 6B) being provided with protrusions (7) extending towards the opposite wall (6b or 6A) so that they may contact therewith as the shoulder blocks (6) enter or leave the ground contacting state during tyre rotation.

2. A pneumatic tyre according to claim 1 characterised in that groove width (W) of the cooling grooves (5) in the circumferentially direction of the tyre is in the size of 1 to 5 mm and the length (h) of its protrusions (7) in the circumferential direction of the tyre is more than 1/3 times the groove width (W).

3. A pneumatic tyre according to claim 1 or 2 characterised in that the protrusions (7) are arranged in two rows one above the other in the radial direction of the tyre.

4. A pneumatic tyre according to any one of claims 1 to 3 characterised in that the cooling groove depth H is the same as the depth of the main grooves (L) of the tyre tread.

# FIG.1

# FIG.2

# FIG.3(a)

# FIG.3(b)

# FIG.4